# EUROPÄISCHE PATENTSCHRIFT

(11) **EP 3 118 739 B1**
(45) Veröffentlichungstag und Bekanntmachung des Hinweises auf die Patenterteilung: **29.01.2020**
(21) Anmeldenummer: 16175806.5
(22) Anmeldetag: 22.06.2016
(51) Int. Cl.: G06F 8/65, G06F 9/445

(54) **VERFAHREN ZUR DURCHFÜHRUNG EINES BETRIEBSSYSTEM-UPDATES**
METHOD FOR CARRYING OUT AN OPERATING SYSTEM UPDATE
PROCÉDÉ DE RÉALISATION D'UNE MISE À JOUR D'UN SYSTÈME D'EXPLOITATION

(30) Priorität: 14.07.2015 DE 102015213138
(43) Veröffentlichungstag der Anmeldung: 18.01.2017
(73) Patentinhaber: Siemens Schweiz AG, 8047 Zürich (CH)
(72) Erfinder: HOCH, Peter, 93080 Pentling (DE)
(74) Vertreter: Maier, Daniel Oliver

(56) Entgegenhaltungen:
- EP-A2- 0 947 920

## Beschreibung

Die Erfindung betrifft ein Verfahren zur Durchführung eines Betriebssystem-Updates für ein Busgerät einer busorientierten programmierbaren Elektroinstallation. Weiterhin betrifft die Erfindung ein Busgerät, geeignet zur Durchführung eines Betriebssystem-Updates. Ferner betrifft die Erfindung ein Computerprogramm zur Durchführung eines Betriebssystem-Updates für ein Busgerät einer busorientierten programmierbaren Elektroinstallation und ein computerlesbares Medium, das auf einem Computer ausführbare Befehle aufweist zur Durchführung eines Betriebssystem-Updates für ein Busgerät einer busorientierten programmierbaren Elektroinstallation.

Um in modernen Gebäuden bzw. Häusern eine einfache und komfortable Bedienung der verschiedenen Busgeräte zu ermöglichen, können diese über einen Installationsbus angesteuert werden. Ein solcher Installationsbus ist beispielsweise der europäische Installationsbus (EIB), der in dem KNX-Standard beschrieben ist.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder re-konfiguriert werden können. Die unter den Busgeräten ausgetauschten Daten können beispielsweise Sensordaten oder Steuerdaten sein.

Das zugrundliegende Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet. Bei der Inbetriebsetzung eines derartigen Bussystems müssen die Kommunikationsbeziehungen der Busteilnehmer projektiert werden. Im Falle des KNX-Busses kommt hierbei häufig die Engineering Tool-Software (ETS) zum Einsatz. Hierbei handelt es sich um eine Software, die auf einem PC bzw. Laptop lauffähig ist und mit dem Bus verbunden wird. Einige mögliche Arten der Verbindungen sind RS232, USB, Funk oder Ethernet. Bei der ETS handelt es sich um ein datenbankbasiertes graphisches Werkzeug zur Projektierung einer busorientierten programmierbaren Elektroinstallation. In der ETS-Datenbank sind die Projektierungsdaten für jeden einzelnen Busteilnehmer bzw. jedes einzelne Applikationsprogramm gespeichert.

Der Austausch von Applikationsprogrammen bei Busgeräten ist schon länger bekannt und wird von vielen Herstellern ermöglicht, auch insbesondere für Endkunden im Feld.

Bisher ist es aber für Endkunden im Feld nicht möglich für ein Busgerät einer busorientierten programmierbaren Elektroinstallation (z.B. KNX-Bus) ein Betriebssystemupdate oder einen Betriebssystemtausch durchzuführen. Dafür muss der Kunde ein Busgerät ausbauen, einschicken und dann wieder einbauen. Dies ist umständlich, kosten- und zeitintensiv.

Die europäische Patentanmeldung EP0947920A2 offenbart ein Verfahren zum Modifizieren eines Grundprogramms in einem Computersystem mit einem Mikrocomputer und einem externen Speichermittel, das in Kommunikation mit dem Mikrocomputer steht, zum Speichern verschiedener Programme und verschiedener Datenposten, wobei der Mikrocomputer einen nicht löschbaren ROM aufweist, der ein Grundprogramm und Grunddaten zum Steuern des Betriebs des Computersystems speichert, einen RAM zum Speichern verschiedener Programme oder verschiedener Arten von Daten, eine CPU zum Ausführen von Programmen und zum Verarbeiten von Daten und eine Schnittstellenschaltung zum Durchführen von Kommunikation mit externen Vorrichtungen, wobei das externe Speichermittel ein Modifikationsprogramm speichert, das als Programmdaten zum Modifizieren eines Teils der Programmdaten dient, die in dem Grundprogramm enthalten sind, und einer Modifikationsstart-adresse, die eine Position in dem Grundprogramm angibt, an der die Modifikation des Grundprogramms durch das Modifikationsprogramm zu starten ist, wobei die CPU eine Adressunterbrechungsfunktion aufweist zum Verarbeiten einer Unterbrechung an einer vorgegebenen Unterbrechungsadresse, wobei das Verfahren zum Modifizieren des Basisprogramms aufweist: den Leseschritt zum Lesen des Modifikationsprogramms und der Modifikationsstartadresse aus dem externen Speichermittel, zum Übertragen des Modifikationsprogramms an das RAM und zum Speichern der Modifikationsstartadresse in der CPU als die Unterbrechungs-adresse, und den Schritt der Ausführung eines Befehls zum Springen zu einer Kopfadresse des Modifikationsprogramms in dem RAM für eine Adressunterbrechung.

In der deutschen Patentanmeldung (Anmeldekennzeichen 102015207900.7, Anmeldetag 29.04.2015) der Anmelderin wird ein Verfahren für die Durchführung eines Betriebssystemupdates beschrieben, dieses Verfahren ist aber verhältnismässig speicherintensiv.

Es ist daher die Aufgabe der vorliegenden Erfindung, ein Speicherplatz effizientes Verfahren für die Durchführung von Betriebssystem-Updates für ein Busgerät einer busorientierten programmierbaren Elektroinstallation bereitzustellen.

Die Aufgabe wird gelöst durch ein Verfahren zur Durchführung eines Betriebssystem-Updates für ein Busgerät einer busorientierten programmierbaren Elektroinstallation, wobei das Busgerät einen Prozessor (Mikrokontroller) und einen Speicher umfasst, das Verfahren umfasst die folgenden Schritte:
Bereitstellen einer Update-Applikation, die die einen Kommunikationsstack und eine entsprechende Hardwareanpassung für Kommunikation und Flashzugriff des Gerätes umfasst;
Laden der Update-Applikation in den Speicher, wobei nach dem erfolgten Laden die Update-Applikation die Kontrolle über das Busgerät übernimmt und das vorhandene Betriebssystem nicht mehr ansprechbar ist;
Initialisieren der Interruptvektoren, damit diese auf die Update-Applikation verweisen;
Durchführen des Betriebssystem-Update, wobei die individuellen Daten des Gerätes so abgelegt werden, dass die Update-Applikation während der Durchführung des Betriebssystem-Updates darauf zugreifen kann; und wobei während der Durchführung des Betriebssystem-Updates die Kommunikation des Busgerätes über die Update-Applikation erfolgt. Durch die Trennung von Update-Applikation und dem neuen Betriebssystem benötigt die Update-Applikation wenig Speicherplatz im Busgerät. Weithin ist der Entwicklungsaufwand für die Update-Applikation kleiner, da das Betriebssystem nicht extra in eine Applikation integriert werden muss. Es kann eine Standard-Update-Applikation entwickelt werden, die einfach an unterschiedliche Hardware anpassbar ist und die ohne Änderung für verschiedene Betriebssystemupdates auf gleicher Hardware verwendet werden kann. Mit Vorteil handelt es sich beim Busgerät um einen KNX-Busteilnehmer. Das Bereitstellen der Update-Applikation kann z.B. durch Erzeugen, Generieren, Programmieren erfolgen, oder durch Bereitstellung aus einer Programmbibliothek.

Eine erste vorteilhafte Ausgestaltung der Erfindung liegt darin, dass nach der Durchführung des Betriebssystem-Updates die Interruptvektoren des Busgerätes für das neue Betriebssystem gesetzt werden. Nach Abschluss des Updates werden die Interruptvektoren so initialisiert, dass sie für das neue Betriebssystem passen. Mit Vorteil wird das Gerät nach der Initialisierung der Interruptvektoren neu gestartet.

Eine weitere vorteilhafte Ausgestaltung der Erfindung liegt darin, dass nach der Durchführung des Betriebssystem-Updates die individuellen Daten des Busgerätes für das neue Betriebssystem gesetzt werden. Bei den individuellen Gerätedaten eines Busgerätes handelt es sich z.B. um die Seriennummer, das Fertigungsdatum, die Individuelle Adresse oder um Kalibrierdaten aus der Endprüfung.

Eine weitere vorteilhafte Ausgestaltung der Erfindung liegt darin, dass nach einem Neustart des Busgerätes das neue Betriebssystem die Kontrolle über das Busgerät übernimmt. Nach erfolgtem Upload der Update-Applikation und einem Neustart übernimmt die Update-Applikation die alleinige Kontrolle über das Busgerät. Das vorhandene Betriebssystem wird nicht mehr angesprochen.

Eine weitere vorteilhafte Ausgestaltung der Erfindung liegt darin, dass vor der Durchführung des Betriebssystem-Updates die alte bereits im Busgerät vorhandene Applikation deaktiviert wird. Durch die Deaktivierung der alten, bereits im Busgerät vorhandenen Applikation, wird sichergestellt, dass diese bei der Durchführung des Betriebssystem-Updates nicht stört.

Eine weitere vorteilhafte Ausgestaltung der Erfindung liegt darin, dass nach Durchführung des Betriebssystem-Updates eine neue Applikation auf das Busgerät geladen wird. Dadurch dass unmittelbar nach der Durchführung des Betriebssystem-Updates eine neue Applikation auf das Busgerät geladen wird, wird die Umrüst- bzw. Aufrüstzeit für das Busgerät sehr niedrig gehalten.

Eine weitere vorteilhafte Ausgestaltung der Erfindung liegt darin, dass das Laden der Update-Applikation und des neuen Betriebssystems über eine Busschnittstelle (KNX) des Busgerätes zur busorientierten programmierbaren Elektroinstallation erfolgt. Bei dieser Ausgestaltung ist kein externes Tool (als Upload-Tool) erforderlich, denn ein anderes Busgerät des Gebäudeautomatisierungssystems wird als Upload-Tool verwendet.

Eine weitere vorteilhafte Ausgestaltung der Erfindung liegt darin, dass das Laden der Update-Applikation und des neuen Betriebssystems über eine externe Schnittstelle des Busgerätes erfolgt. Z.B. kann das Laden der Update-Applikation über eine USB-Schnittstelle des Busgerätes durch ein Konfigurationsgerät (z.B. ETS erfolgen). Dadurch wird beim Ladevorgang der Busverkehr (Traffic) nicht beeinträchtigt.

Die Aufgabe wird weiterhin gelöst durch ein Computerprogramm zur Durchführung eines Betriebssystem-Updates für ein Busgerät einer busorientierten programmierbaren Elektroinstallation mit Instruktionen zur Ausführung des erfindungsgemässen Verfahrens. Dadurch kann ein Betriebssystem-Update computerunterstützt und effektiv erfolgen, z.B. durch einen Personal Computer (PC), insbesondere durch einen Endkunden im Feld.

Die Aufgabe wird weiterhin gelöst durch ein computerlesbares Medium, das auf einem Computer ausführbare Befehle aufweist zur Durchführung eines Betriebssystem-Updates gemäss dem erfindungsgemässen Verfahren. Dadurch kann das Computerprogramm zur Durchführung eines Betriebssystem-Updates sehr leicht auf einem Computer (insbesondere bei einem Endkunden im Feld) implementiert bzw. installiert werden.

Die Aufgabe wird weiterhin gelöst durch ein Busgerät einer busorientierten programmierbaren Elektroinstallation, geeignet zur Durchführung des erfindungsgemässen Verfahrens. Bei einem solchen Busgerät kann ein Endkunde im Feld ein Betriebssystem-Update durchführen. Ein Kunde braucht für ein Betriebssystem-Update das Busgerät nicht ausbauen, an den Hersteller oder Lieferanten einschicken, und dann wieder einbauen.

Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung für ein Gebäudeautomatisierungssystem mit zwei beispielhaften Busgeräten,
- FIG 2: eine zweite beispielhafte Anordnung für ein Gebäudeautomatisierungssystem mit mehreren beispielhaften Busteilnehmern,
- FIG 3: einen ersten beispielhaften Speicher eines Busgerätes einer busorientierten programmierbaren Elektroinstallation mit geladener Applikation und Betriebssystem,
- FIG 4: einen zweiten beispielhaften Speicher eines Busgerätes einer busorientierten programmierbaren Elektroinstallation mit geladener Update-Applikation und Betriebssystem,
- FIG 5: ein erstes beispielhaftes Ablaufdiagramm für ein Verfahren zur Durchführung eines BetriebssystemUpdates für ein Busgerät einer busorientierten programmierbaren Elektroinstallation, und
- FIG 6: ein zweites beispielhaftes Ablaufdiagramm für ein Verfahren zur Durchführung eines BetriebssystemUpdates für ein Busgerät einer busorientierten programmierbaren Elektroinstallation.

Gebäudeinstallationen, insbesondere Elektroinstallationen zur Steuerung von Lichtquellen, Jalousien, Ventilatoren, Heizungen, Alarmanlagen etc. werden häufig unter Verwendung von standardisierter Bustechnik realisiert, z.B. mit einem KNX-Bussystem. Mit einem KNX-Bussystem werden in einem Gebäude Bedienelemente (Sensoren) und entsprechende Aktoren miteinander verbunden und angesteuert. Jeder Teilnehmer eines solchen Bussystems verfügt über einen eigenen Mikroprozessor und kann somit selbständig und unabhängig von einem zentralen Prozessor seine Daten verwalten. Jedem Busgerät wird hierzu ein Applikationsprogramm mit entsprechenden Kommunikationsobjekten und Parametern zugeordnet. Bei der Inbetriebnahme eines KNX-Bussystems (oder einem ähnlichen System) müssen die Kommunikationsbeziehungen und Parameter der Busgeräte projektiert werden. Für die Projektierung von KNX-Bussystemen wird üblicherweise die Engineering-Tool-Software (ETS) verwendet. Bei der ETS handelt es sich um ein datenbankbasiertes grafisches Werkzeug zur Projektierung von busorientierten programmierbaren Elektroinstallationen. Unter Verwendung einer Datenbank werden in der ETS die Projektierungsdaten, d. h. die Kommunikationsbeziehungen und die Geräteparameter, für jedes Busgerät bzw. jedes Applikationsprogramm separat erstellt und abschließend über eine Schnittstelle (z.B. USB Datenschnittstelle) in das Bussystem und deren Busgeräte übertragen bzw. eingespeist.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder re-konfiguriert werden können. Die unter den Busgeräten ausgetauschten Daten können beispielsweise Sensordaten oder Steuerdaten sein.

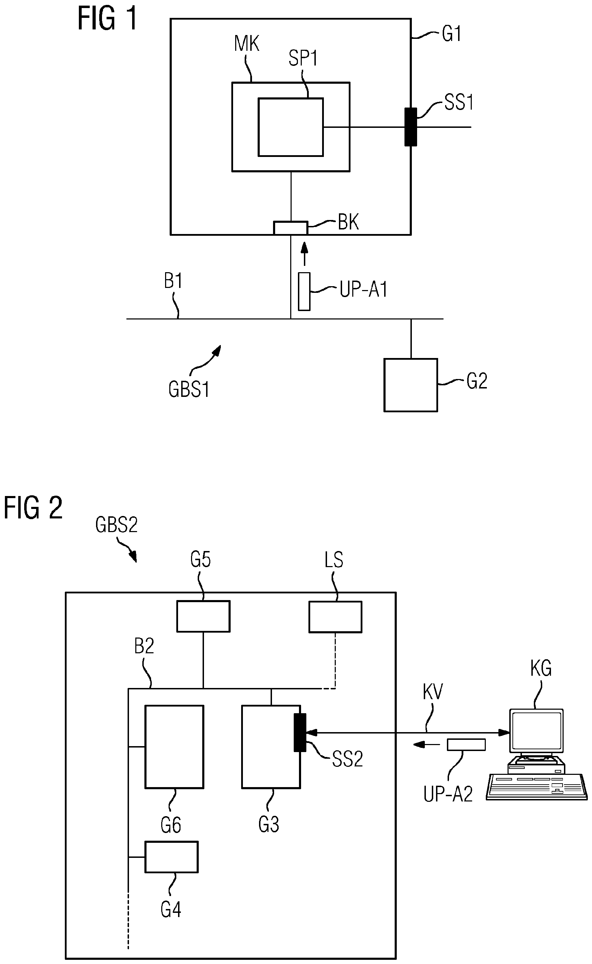

Figur 1 zeigt eine beispielhafte Anordnung für ein Gebäudeautomatisierungssystem GBS1 basierend auf einer busorientierten programmierbaren Elektroinstallation mit zwei beispielhaften Busgeräten G1, G2, die über einen Installationsbus B1, z.B. ein KNX-Bus, verbunden sind. Bei der Darstellung gemäss Figur 1 handelt es sich nur um eine schematische Darstellung, wobei die Grössenproportionen der dargestellten Elemente nicht realitätsgetreu dargestellt sind.

Ein Busgerät G1, G2 weist in der Regel einen Prozessor MK als Steuereinheit auf, beispielsweise einen Mikrokontroller. Die Steuereinheit MK kann Steuerbefehle für die angeschlossene Gebäudeinstallation GBS1 erzeugen und/oder Sensordaten von der Gebäudeinstallation GBS1 auswerten. Um der Steuereinheit MK einen Datenaustausch mit dem Gebäudeinstallationsbus B1 zu ermöglichen, weist ein Busgerät G1, G2 in der Regel eine spezielle Anschlussschaltung als Busankoppler BK auf. Hierbei kann es sich beispielsweise um einen integrierten Schaltkreis (IC Integrated Circuit) handeln. Die Anschlussschaltung BK umfasst auch die elektrischen Anschlüsse zum Anschließen des Busgeräts G1, G2 an den Gebäudeinstallationsbus B1.

Ein Prozessor MK als Steuereinheit eines Busgerätes G1 weist in der Regel folgende Speichertypen auf:
- einen RAM-Speicher (Random Access Memory) zum Speichern von Daten, die während des Betriebs anfallen;
- einen ROM-Speicher (Read Only Memory), in dem z.B. auch individuelle Gerätedaten abgelegt sein können;
- einen Flash-Speicher (z.B. EEPROM) für die persistente Speicherung der Applikationsprogramme und der dazugehörigen Projektierungsdaten, sowie des Betriebssystems. In einem Teil des Flash-Speichers können auch die individuellen Gerätedaten abgelegt sein.

In der Darstellung gemäss Figur 1 umfasst der Prozessor MK des Busgerätes G1 einen beispielhaften Flash-Speicher SP1, insbesondere geeignet zur Aufnahme des Betriebssystems und der Applikationen (Programme und die dazugehörigen Parametrierungen) für das Busgerät G1.

Mit Vorteil handelt es sich beim Busgerät G1 um einen Busteilnehmer (z.B. Aktor oder Sensor) einer busorientierten programmierbaren Elektroinstallation GBS1 (z.B. KNX-System), wobei das Busgerät G1 mindestens einen Prozessor (z.B. Mikrokontroller) MK und einen Speicher SP1 (z.B. einen persistenten Flash-Speicher) umfasst.

Das Busgerät G1 ist dazu eingerichtet über eine Busschnittstelle BK (Busankoppler) oder über eine externe Schnittstelle SS1 (z.B. USB Schnittstelle) eine Update-Applikation UP-A1, die einen Kommunikationsstack und eine entsprechende Hardwareanpassung für Kommunikation und Flashzugriff des Busgerätes G1 umfasst, in den Speicher SP1 zu laden. Über die externe Schnittstelle SS1 kann die Update-Applikation UP-A1 z.B. von einem Konfigurationsgerät (Upload-Tool, z. B. ETS (Engineering-Tool-Software)) auf das Gerät G1 übertragen werden.

Figur 2 zeigt eine zweite beispielhafte Anordnung für ein Gebäudeautomatisierungssystem GBS2 mit mehreren beispielhaften Busteilnehmern G3 - G6, und einer optionalen Leitstelle LS (z.B. eine Gebäude-Management-Station), die über einen Gebäudeinstallationsbus B2 (z.B. KNX-Bus) verbunden sind.

In der Darstellung gemäss Figur 2 erfolgt ein Betriebssystemupdate für das Busgerät G3 durch ein Laden der Update-Applikation UP-A2, die einen Kommunikationsstack und eine entsprechende Hardwareanpassung für Kommunikation und Flashzugriff des Gerätes G3 umfasst, über die externe Schnittstelle SS2, z.B. eine USB-Schnittstelle. Das Busgerät G3 ist dazu eingerichtet, dass die Update-Applikation UP-A2 in den Speicher in den Speicher des Gerätes G3 geladen wird, wobei nach dem erfolgten Laden die Update-Applikation UP-A2 die Kontrolle über das Busgerät G3 übernimmt und das vorhandene Betriebssystem nicht mehr ansprechbar ist. Weiterhin erfolgt ein Initialisieren der Interruptvektoren, damit diese auf die Update-Applikation UP-A2 verweisen. Danach erfolgt das Durchführen des Betriebssystem-Updates, wobei die individuellen Daten des Gerätes so abgelegt werden, dass die Update-Applikation UP-A2 während der Durchführung des Betriebssystem-Updates darauf zugreifen kann, und wobei während der Durchführung des Betriebssystem-Updates die Kommunikation des Busgerätes über die Update-Applikation UP-A2 erfolgt.

In der Darstellung gemäss Figur 2 erfolgt das Laden der Update-Applikation UP-A2 und des neuen Betriebssystems über die Kommunikationsverbindung KV (z.B. ein USB-Übertragungskabel) und über die Schnittstelle SS2 auf das Gerät G3.

Beim Konfigurationsgerät KG handelt es sich bei KNX-Systemen mit Vorteil um eine ETS (Engineering-Tool-Software).

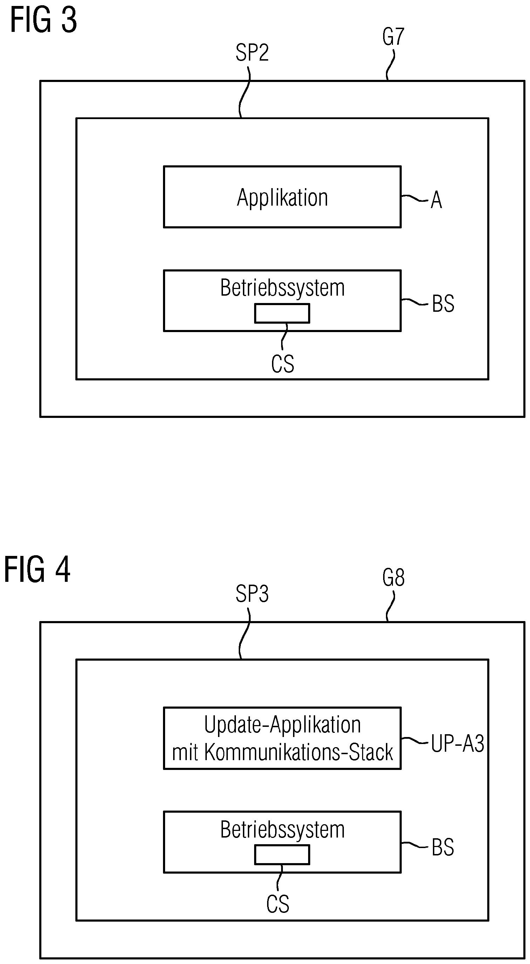

Figur 3 zeigt einen ersten beispielhaften Speicher SP2 eines Busgerätes G7 einer busorientierten programmierbaren Elektroinstallation mit geladener Applikation A und Betriebssystem BS. Das Betriebssystem BS umfasst einen Kommunikations-Stack CS zur Kommunikation des Gerätes G7 z.B. mit anderen Busteilnehmern. Der Kommunikations-Stack CS umfasst die zum Senden und Empfangen von Daten benötigte Funktionalität für ein Busgerät.

Die Darstellung gemäss Figur 3 stellt das Ausgangsszenario dar, mit dem Betriebssystem BS als auszutauschendem Betriebssystem. In Figur 3 sind sowohl die Applikation A als auch das Betriebssystem BS aktiv.

Figur 4 zeigt einen zweiten beispielhaften Speicher SP3 eines Busgerätes G8 einer busorientierten programmierbaren Elektroinstallation mit geladener Update-Applikation UP-A3 und dem Betriebssystem BS. Die Update-Applikation UP-A3 umfasst einen Kommunikationsstack und eine entsprechende Hardwareanpassung für Kommunikation und Flashzugriff des Gerätes G8.

Diese Update-Applikation UP-A3 wird an die Position in das Gerät geladen an der die "normale" Applikation auch wäre.

Nach erfolgtem Upload der Update-Applikation UP-A3 übernimmt die Updateapplikation UP-A3 die alleinige Kontrolle über das Gerät G8. Das vorhandene Betriebssystem BS wird nicht mehr angesprochen. Dazu gehört auch, dass die Interruptvektoren so initialisiert werden, dass sie alle auf die Update-Applikation UP-A3 verweisen.

Mit Vorteil werden alle individuellen Daten werden so abgelegt, dass die Update-Applikation UP-A3 darauf zugreifen kann, während das Betriebssystem Update durchgeführt wird und dieser Speicherbereich gelöscht bzw. neu beschrieben wird. Zu den individuellen Daten gehören z.B. die Individuelle Adresse, Seriennummer, Fertigungsdaten des Gerätes G8.

Während des Betriebssystemupdates (bzw. Upload des neuen Betriebssystems) läuft die Kommunikation mit dem Gerät G8 über die Update-Applikation UP-A3 und der Speicherplatz für das Betriebssystem kann vom Updatetool (z.B. ETS bei KNX-Systemen) direkt beschrieben werden.

Nach Abschluss des Upload des neuen Betriebssystems werden die Interruptvektoren so initialisiert, dass sie für das neue Betriebssystem passen und das Gerät G8 wird mit Vorteil neu gestartet. Dadurch geht die Kontrolle nach dem Neustart auf das neue Betriebssystem über.

Die Individuellen Daten können am Schluss (vor dem Neustart) von der Update-Applikation UP-A3 wieder im neuen Betriebssystem gesetzt werden oder das Image für das Update wird mit den vorher vom Upload-Tool (z.B. ETS) ausgelesenen Daten so gepatcht, dass die Daten schon korrekt im Betriebssystem Image abgelegt sind.

Unter Umständen ist es erforderlich den Block mit den Interruptvektoren beim Upload an eine andere Stelle zu schreiben. Die Update-Applikation UP-A3 kopiert die Daten dann vor dem Neustart an die korrekte Position im Speicher SP3 (z.B. Flash-Speicher). Dies ist erforderlich um sicherzustellen, dass die Zeit in der ein Netzausfall ein defektes Gerät hervorruft möglichst klein ist. Die Spannungsversorgung für das Umkopieren des Blocks wird von dem Ladeelko (Elektrokondensator) der Spannungsversorgung sichergestellt.

Als nächster Schritt kann die neue Applikation auch in das Gerät G8 geladen werden.

Das zu übertragene neue Betriebssystem kann bei diesem Verfahren auch komprimiert oder verschlüsselt übertragen werden. Die Update-Applikation UP-A3 übernimmt in diesem Fall auch die Entschlüsselung bzw. Dekomprimierung. Der Schlüssel für die Dekomprimierung kann zwischen der Update-Applikation UP-A3 und dem Tool (Uploadtool, z.B. ETS) zur Laufzeit ausgehandelt werden. Gängige Kompromier- (z.B. RLE) bzw. Verschlüsselungsverfahren (z.B. RSA) sind dabei verwendbar.

Dadurch kann ein Ausspähen der Betriebssystemdaten (Programmcode) während der Übertragung verhindert werden. Durch die dauerhafte Speicherung der individuellen Daten in der Update-Applikation UP-A3 kann dieses Verfahren durch eine Störung (z.B. Netzausfall) nicht so beeinflusst oder gestört werden, dass das Gerät G8 nicht mehr anläuft, da alle relevanten Daten während des Updates weiter zur Verfügung stehen. Falls also ein Netzausfall eintritt, kann die Gerät ganz normal wieder anlaufen (mit der Update-Applikation UP-A3) und das Update weiter durchgeführt werden.

Mit Vorteil implementiert die Update-Applikation UP-A3 nur die Teile des Kommunikations-Stacks, die für die Identifizierung (nach einem Netzausfall) und den Upload benötigt werden.

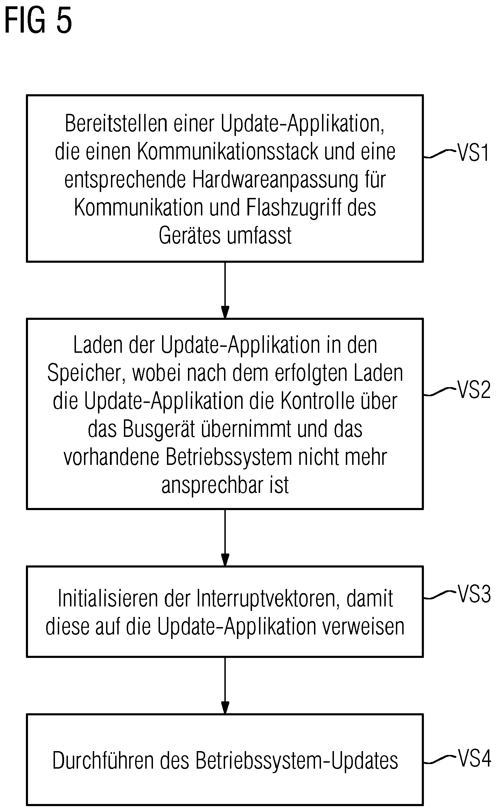

Figur 5 zeigt ein erstes beispielhaftes Ablaufdiagramm für ein Verfahren zur Durchführung eines Betriebssystem-Updates für ein Busgerät einer busorientierten programmierbaren Elektroinstallation, wobei das Busgerät einen Prozessor (Mikrokontroller) und einen Speicher umfasst, das Verfahren umfasst die folgenden Schritte:
(VS1) Bereitstellen einer Update-Applikation, die die einen Kommunikationsstack und eine entsprechende Hardwareanpassung für Kommunikation und Flashzugriff des Gerätes umfasst;
(VS2) Laden der Update-Applikation in den Speicher, wobei nach dem erfolgten Laden die Update-Applikation die Kontrolle über das Busgerät übernimmt und das vorhandene Betriebssystem nicht mehr ansprechbar ist;
(VS3) Initialisieren der Interruptvektoren, damit diese auf die Update-Applikation verweisen;
(VS4) Durchführen des Betriebssystem-Update, wobei die individuellen Daten des Gerätes so abgelegt werden, dass die Update-Applikation während der Durchführung des Betriebssystem-Updates darauf zugreifen kann; und wobei während der Durchführung des Betriebssystem-Updates die Kommunikation des Busgerätes über die Update-Applikation erfolgt.

Mit Vorteil wird vor der Durchführung des Verfahrens die alte Applikation deaktiviert. Das Bereitstellen der Update-Applikation kann z.B. durch Erzeugen, Generieren, Programmieren erfolgen, oder durch Bereitstellung aus einer Programmbibliothek. Die Update-Applikation kann z.B. als "COTS" Software (Commercials Off The Shelf) durch einen Download (Herunterladen) vom Internet bezogen werden. Die Update-Applikation kann dabei den Kommunikations-Stack umfassen oder Mittel (z.B. entsprechenden Programmcode) zum Verwalten des Kommunikations-Stacks.

Das Verfahren kann mit bei einer busorientierten programmierbaren Elektroinstallation üblicherweise vorhandenen Hardware (Kommunikationsbus, Busgeräte, Konfigurationsgeräte (z.B. ETS) mit entsprechender Software durchgeführt werden.

Mit Vorteil wird das Verfahren insbesondere für KNX-Produkte (Aktoren, Sensoren, etc.) verwendet.

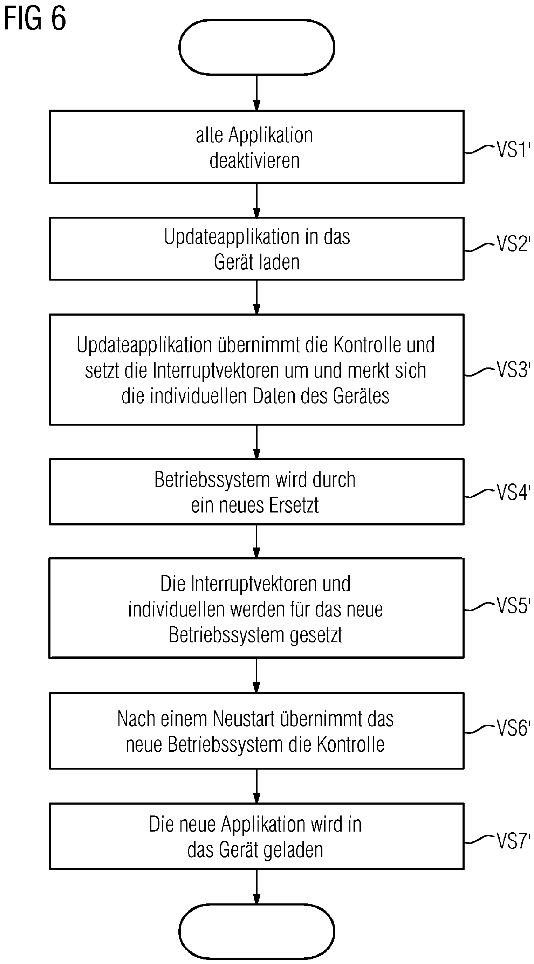

Figur 6 zeigt ein zweites beispielhaftes Ablaufdiagramm für zur Durchführung des erfindungsgemässen Betriebssystem-Updates für ein Busgerät einer busorientierten programmierbaren Elektroinstallation, wobei das Busgerät einen Prozessor (Mikrokontroller) und einen Speicher umfasst, das Verfahren umfasst die folgenden Schritte:
(VS1') alte Applikation deaktivieren (optional);
(VS2') Updateapplikation in das Gerät laden;
(VS3') Die Updateapplikation übernimmt die Kontrolle und setzt die Interruptvektoren um und merkt sich die individuellen Daten des Gerätes;
(VS4') altes Betriebssystem wird durch ein neues Betriebssystem ersetzt;
(VS5') Die Interruptvektoren und individuellen werden für das neue Betriebssystem gesetzt;
(VS6') Nach einem Neustart übernimmt das neue Betriebssystem die Kontrolle;
(VS7') Die neue Applikation wird in das Gerät geladen (optional).

Das Verfahren kann mit bei einer busorientierten programmierbaren Elektroinstallation üblicherweise vorhandenen Hardware (Kommunikationsbus, Busgeräte, Konfigurationsgeräte (z.B. ETS) mit entsprechender Software durchgeführt werden.

Mit Vorteil wird das Verfahren insbesondere für KNX-Produkte (Aktoren, Sensoren, etc.) verwendet.

Der Vorteil der vorliegenden Erfindung liegt insbesondere in der Trennung der Updateapplikation und dem neuen Betriebssystem. Dadurch ist die Updateapplikation kleiner, d.h. sie benötigt wenig Speicherplatz. Durch diese Trennung ist es nach Aushandlung eines Schlüssels möglich die Daten des Betriebssystems während der Übertragung vor unbefugtem Zugriff zu schützen.

Weiterhin ist der Entwicklungsaufwand kleiner, da das Betriebssystem nicht extra in eine Applikation integriert werden muss. Es kann eine Standard-Updateapplikation entwickelt werden, die einfach an unterschiedliche Hardware (z.B. unterschiedliche Gerätetypen) anpassbar ist und die ohne Änderung für verschiedene Betriebssystemupdates auf gleicher Hardware verwendet werden kann. Gleiche Hardware bedeutet in diesem Sinne, dass nur die Hardware im Kommunikationsbereich identisch sein muss. Alles andere muss nur so initialisiert werden, dass sich die Hardware in einem sicheren Zustand befindet. Es ist damit möglich eine dedizierte Updateapplikation für eine ganze Gerätefamilie zu erstellen. (z.B. Binäraktoren mit 2, 4, 8 oder 12 Kanälen). Dadurch ist es einfacher Betriebssystemupdates in der Entwicklung automatisiert zu erstellen bzw. es können direkt die Daten verwendet werden, die für die Fertigung der Geräte benötigt werden.

## Patentansprüche

1. Verfahren zur Durchführung eines Betriebssystem-Updates für ein Busgerät (G1 - G8) einer busorientierten programmierbaren Elektroinstallation (GBS1, GBS2), wobei das Busgerät (G1 - G8) einen Prozessor (MK) und einen Flashspeicher (SP1 - SP3) umfasst, das Verfahren umfasst die folgenden Schritte:
(VS1) Bereitstellen einer Update-Applikation (UP-A1 - UP-A3), die einen Kommunikationsstack (CS) und eine entsprechende Hardwareanpassung für Kommunikation und Flashzugriff des Gerätes (G1 - G8) umfasst;
Laden der Update-Applikation (UP-A1 - UP-A3) in den Flashspeicher, wobei nach dem erfolgten Laden die Update-Applikation (UP-A1 - UP-A3) die Kontrolle über das Busgerät (G1 - G8) übernimmt und das vorhandene Betriebssystem (BS) nicht mehr ansprechbar ist;
Initialisieren der Interruptvektoren, damit diese auf die Update-Applikation (UP-A1 - UP-A3) im Flashspeicher verweisen;
Durchführen des Betriebssystem-Update, wobei die individuellen Daten des Gerätes (G1 - G8) so abgelegt werden, dass die Update-Applikation (UP-A1 - UP-A3) während der Durchführung des Betriebssystem-Updates darauf zugreifen kann; und wobei während der Durchführung des Betriebssystem-Updates die Kommunikation des Busgerätes (G1 - G8) über die Update-Applikation (UP-A1 - UP-A3) erfolgt.

2. Verfahren nach Anspruch 1, wobei nach der Durchführung des Betriebssystem-Updates die Interruptvektoren des Busgerätes (G1 - G8) für das neue Betriebssystem gesetzt werden.

3. Verfahren nach einem der vorstehenden Ansprüche, wobei nach der Durchführung des Betriebssystem-Updates die individuellen Daten des Busgerätes (G1 - G8) für das neue Betriebssystem gesetzt werden.

4. Verfahren nach einem der vorstehenden Ansprüche, wobei nach einem Neustart des Busgerätes (G1 - G8) das neue Betriebssystem die Kontrolle über das Busgerät (G1 - G8) übernimmt.

5. Verfahren nach einem der vorstehenden Ansprüche, wobei vor der Durchführung des Betriebssystem-Updates die alte bereits im Busgerät (G1 - G8) vorhandene Applikation deaktiviert wird.

6. Verfahren nach einem der vorstehenden Ansprüche, wobei nach Durchführung des Betriebssystem-Updates eine neue Applikation auf das Busgerät (G1 - G8) geladen wird.

7. Verfahren nach einem der vorstehenden Ansprüche, wobei das Laden der Update-Applikation (UP-A1 - UP-A3) und des neuen Betriebssystems über eine Busschnittstelle (KNX) des Busgerätes (G1 - G8) zur busorientierten programmierbaren Elektroinstallation (GBS1, GBS2) erfolgt.

8. Verfahren nach einem der vorstehenden Ansprüche, wobei das Laden der Update-Applikation (UP-A1 - UP-A3) und des neuen Betriebssystems über eine externe Schnittstelle des Busgerätes (G1 - G8) erfolgt.

9. Computerprogramm zur Durchführung eines Betriebssystem-Updates für ein Busgerät (G1 - G8) einer busorientierten programmierbaren Elektroinstallation (GBS1, GBS2) mit Instruktionen zur Ausführung des Verfahrens nach einem der Patentansprüche 1 bis 8.

10. Computerlesbares Medium, das auf einem Computer ausführbare Befehle aufweist zur Durchführung eines Betriebssystem-Updates gemäss eines Verfahren nach einem der Patentansprüche 1 bis 8 für ein Busgerät (G1 - G8) einer busorientierten programmierbaren Elektroinstallation (GBS1, GBS2).

11. Busgerät (G1 - G8) einer busorientierten programmierbaren Elektroinstallation (GBS1, GBS2), geeignet zur Durchführung eines Verfahrens nach einem der Ansprüche 1 bis 8.

## Claims

1. Method for carrying out an operating system update for a bus device (G1 - G8) of a bus-oriented programmable electrical installation (GBS1, GBS2), wherein the bus device (G1 - G8) comprises a processor (MK) and a flash memory (SP1 - SP3), the method comprising the following steps:
(VS1) providing an update application (UP-A1 - UP-A3), which comprises a communication stack (CS) and a corresponding hardware adaptation for communication and flash access of the device (G1 - G8);
loading the update application (UP-A1 - UP-A3) into the flash memory, wherein after loading has taken place, the update application (UP-A1 - UP-A3) takes over control of the bus device (G1 - G8) and the previous operating system (BS) is no longer accessible;
initialising the interrupt vectors, such that they refer to the update application (UP-A1 - UP-A3) in the flash memory;
carrying out the operating system update, wherein the individual data of the device (G1 - G8) is stored such that the update application (UP-A1 - UP-A3) can access the data while the operating system update is being carried out; and wherein the communication of the bus device (G1 - G8) takes place via the update application (UP-A1 - UP-A3) while the operating system update is being carried out.

2. Method according to claim 1, wherein after the operating system update has been carried out, the interrupt vectors of the bus device (G1 - G8) are set for the new operating system.

3. Method according to one of the preceding claims, wherein after the operating system update is carried out, the individual data of the bus device (G1 - G8) is set for the new operating system.

4. Method according to one of the preceding claims, wherein after a restart of the bus device (G1 - G8), the new operating system takes over control of the bus device (G1 - G8).

5. Method according to one of the preceding claims, wherein, prior to the operating system update being carried out, the old, existing application on the bus device (G1 - G8) is deactivated.

6. Method according to one of the preceding claims, wherein after the operating system update has been carried out, a new application is loaded onto the bus device (G1 - G8).

7. Method according to one of the preceding claims, wherein the loading of the update application (UP-A1 - UP-A3) and the new operating system takes place via a bus interface (KNX) of the bus device (G1 - G8) for bus-oriented programmable electrical installation (GBS1, GBS2).

8. Method according to one of the preceding claims, wherein the loading of the update application (UP-A1 - UP-A3) and the new operating system takes place via an external interface of the bus device (G1 - G8).

9. Computer program for carrying out an operating system update for a bus device (G1 - G8) of a bus-oriented programmable electrical installation (GBS1, GBS2) with instructions for carrying out the method according to one of claims 1 to 8.

10. Computer readable medium which has commands which are executable on a computer for carrying out an operating system update in accordance with a method according to one of claims 1 to 8 for a bus device (G1 - G8) of a bus-oriented programmable electrical installation (GBS1, GBS2).

11. Bus device (G1 - G8) of a bus-oriented programmable electrical installation (GBS1, GBS2), suitable for carrying out a method according to one of claims 1 to 8.

## Revendications

1. Procédé de réalisation d'une mise à jour de système d'exploitation pour un appareil bus (G1 - G8) d'une installation électrique programmable orientée bus (GBS1, GBS2), l'appareil bus (G1 - G8) comprenant un processeur (MK) et une mémoire flash (SP1 - SP3), le procédé comprenant les étapes suivantes :
(VS1) mise à disposition d'une application de mise à jour (UP-A1 - UP-A3) qui comprend une pile de communication (CS) et une adaptation hardware correspondante pour la communication et l'accès flash de l'appareil (G1 - G8) ;
chargement de l'application de mise à jour (UP-A1 - UP-A3) dans la mémoire flash, l'application de mise à jour (UP-A1 - UP-A3), une fois le chargement effectué, prenant le contrôle sur l'appareil bus (G1 - G8) et le système d'exploitation existant (BS) ne réagissant plus ;
initialisation des vecteurs d'interruption pour que ceux-ci renvoient à l'application de mise à jour (UP-A1 - UP-A3) dans la mémoire flash ;
exécution de la mise à jour de système d'exploitation, les données individuelles de l'appareil (G1 - G8) étant déposées de telle sorte que l'application de mise à jour (UP-A1 - UP-A3) peut y accéder pendant l'exécution de la mise à jour de système d'exploitation ; et la communication de l'appareil bus (G1 - G8) ayant lieu via l'application de mise à jour (UP-A1 - UP-A3) pendant l'exécution de la mise à jour de système d'exploitation.

2. Procédé selon la revendication 1, les vecteurs d'interruption de l'appareil bus (G1 - G8) étant mis en place pour le nouveau système d'exploitation après l'exécution de la mise à jour de système d'exploitation.

3. Procédé selon l'une des revendications précédentes, les données individuelles de l'appareil bus (G1 - G8) étant mises en place pour le nouveau système d'exploitation après l'exécution de la mise à jour de système d'exploitation.

4. Procédé selon l'une des revendications précédentes, le nouveau système d'exploitation, après un redémarrage de l'appareil bus (G1 - G8), prenant le contrôle sur l'appareil bus (G1 - G8).

5. Procédé selon l'une des revendications précédentes, l'ancienne application qui existe déjà dans l'appareil bus (G1 - G8) étant désactivée avant l'exécution de la mise à jour de système d'exploitation.

6. Procédé selon l'une des revendications précédentes, une nouvelle application étant chargée sur l'appareil bus (G1 - G8) après l'exécution de la mise à jour de système d'exploitation.

7. Procédé selon l'une des revendications précédentes, le chargement de l'application de mise à jour (UP-A1 - UP-A3) et du nouveau système d'exploitation s'effectuant via une interface bus (KNX) de l'appareil bus (G1 - G8) vers l'installation électrique programmable orientée bus (GBS1, GBS2).

8. Procédé selon l'une des revendications précédentes, le chargement de l'application de mise à jour (UP-A1 - UP-A3) et du nouveau système d'exploitation s'effectuant via une interface externe de l'appareil bus (G1 - G8).

9. Programme informatique pour l'exécution d'une mise à jour de système d'exploitation pour un appareil bus (G1 - G8) d'une installation électrique programmable orientée bus (GBS1, GBS2) avec des instructions pour exécuter le procédé selon l'une des revendications 1 à 8.

10. Support lisible par ordinateur qui comporte des ordres exécutables sur un ordinateur pour exécuter une mise à jour de système d'exploitation selon un procédé selon l'une des revendications 1 à 8 pour un appareil bus (G1 - G8) d'une installation électrique programmable orientée bus (GBS1, GBS2).

11. Appareil bus (G1 - G8) d'une installation électrique programmable orientée bus (GBS1, GBS2), adapté pour l'exécution d'un procédé selon l'une des revendications 1 à 8.
